# EUROPEAN PATENT SPECIFICATION

(11) **EP 4 179 284 B1**
(45) Date of publication and mention of the grant of the patent: **29.07.2026**
(21) Application number: 21740518.2
(22) Date of filing: 08.07.2021
(51) Int. Cl.: F16L 23/00, G01M 3/28, F16J 15/06

(54) **GASKET ASSEMBLY**
DICHTUNGSANORDNUNG
ENSEMBLE JOINT D'ÉTANCHÉITÉ

(30) Priority: 10.07.2020 GB 202010632
(43) Date of publication of application: 17.05.2023
(73) Proprietor: Alba Gaskets Limited, Aberdeen AB12 3LF (GB)
(72) Inventor: RUZ, Sigfrid, Aberdeen AB12 3LF (GB)
(74) Representative: Marks & Clerk LLP
(86) International application number: PCT/EP2021/069083
(87) International publication number: WO 2022/008696

(56) References cited:
- WO-A1-2016/108695
- JP-A- H08 309 517
- US-A- 4 019 371
- US-A1- 2010 176 559

## Description

### FIELD

The present disclosure relates to a gasket assembly.

### BACKGROUND

Gaskets are employed in order to provide a seal between two mating surfaces or components. For example, in the oil and gas field, gaskets are typically used in any connections between adjacent fluid-conveying components, for example between adjacent pipes, between a pipe and a valve, or within fluid processing equipment. It is desirable to test the integrity of the seal before the connection is fully pressured up for use, in order to ensure that a seal is provided. Confirming that a robust seal is provided before use of the connection is desirable because faulty seals can have a severe impact on the immediate and local environment and also pose safety risks to those operating the equipment and in the local area.

Gaskets provided with a port adjacent the sealing area may allow a user to selectively pressure test an interior area of the gasket seal, in order to investigate the seal provided by the gasket before the connected pipes are fully pressurised for use. Such gaskets may have a duct allowing pressure testing equipment to be connected and disconnected from the port.

During transportation, installation, testing, use and disassembly the duct may be damaged due to impacts or excessive mechanical loading being applied to the relatively thin duct. This may deform the duct, or damage a connection between the duct and the rest of the gasket. Mechanical blockers or anti-rotation devices provided on the duct to transfer load to adjacent components are of limited efficacy, can increase installation complexity and often foul on neighbouring components. This makes their use less suitable in many applications and increases the installation time.

WO2016108695A1 describes a method to detect a fluid leakage in a joint area between two pipe sections that are joined together to provide a continuous fluid-carrying pipeline, where a casing-formed joint element with an inwardly protruding flange part that is inserted between the pipe sections, the ends of which lie against sealing elements at the oppositely directed flange surfaces, and a coupling body on each side of the joint element forms an engagement with respective pipe circumference surfaces and is made to squeeze the pipe ends against each other via the joint element. The method is characterised in that a second sealing element that seals between the joint element, and the pipe section surfaces is set up at the pipe ends, and any fluid leakages past the two sealing systems are monitored in a fluid channel system, in connection to the joint element, between the sealing systems and which is set up by a radially formed ring-formed hollow space, outside respective sealing elements and defined between respective, oppositely directed flange surfaces and the ends of the pipe sections where the hollow space is fluid connected with another channel system via the joint element and connected to a pressure sensor that registers the pressure in the fluid channel system for alarms and the initiation of relevant actions. A device to carry out the method is also described.

US4019371A discloses apparatus and method for externally testing flanged or hubbed connections used on fluid conducting conduits. A ring gasket fits between the faces of the connecting flanges or hubs to effect a fluid tight seal. A test ring also fits between the faces of the hub or flange connection in a manner so as to form a space between the test ring and the ring gasket. Seal means closes the space between the test ring and the faces of the flanges or hubs. The outside diameter of the test ring is confined within fastening means which secures the hubs or flanges together. Fluid under pressure, used to test the effectiveness of the ring gasket seal, is applied to the space between the ring gasket and the test ring seal means. The pressure in that space falls when the ring gasket is defective but remains constant if the ring gasket is sound. Following the test, fluid pressure is bled off the space between the ring gasket and the test ring seal means. The test fluid pressure is applied to and bled from such space through a pressure port or passageway formed in the test ring or in one of the flanges or hubs.

US2010176559A1 discloses a gasket for sealing a probe having a probe head and a probe cable between connector flanges, wherein the probe head has a diameter larger than the probe cable, has a generally annular body. The generally annular body includes an upper surface for sealing against an upper connector flange and a lower surface for sealing against a lower connector flange, and has a generally annular inner wall and a generally annular outer wall, the generally annular inner wall forming an aperture. The generally annular body also includes at least one hinge, the hinge including a radially arranged probe cable insertion port, and a slit. The slit comprises opposing slit sidewalls. When the hinge is open, the slit sidewalls allow the probe cable to be inserted into the probe cable insertion port, and when the hinge is closed, the slit sidewalls contact each other with the probe cable insertion port to form a generally annular seal around the probe cable with the probe head in the aperture.

### SUMMARY

An aspect of the present disclosure relates to a gasket assembly according to claim 1.

The gasket assembly further provides a brace. The brace may be for supporting loads applied to the protective collar. The brace may engage, or be configured to engage the protective collar to resist rotation of the protective collar relative to the duct during use.

The gasket assembly may be for use between two adjacent mating surfaces. The mating surfaces may be flanged mating surfaces. The mating surfaces may be any surfaces that are to be secured together and between which a fluid-tight seal is required. The mating surfaces will typically be joining surfaces of components configured to transport or process fluid. The gasket assembly allows a seal to be provided, and the integrity of said seal to be tested before use. As such, the gasket assembly may be used between any connected components that require a seal against fluid leakage. The gasket may be installed between adjacent pipes (e.g. oil and gas pipes), a pipe and a valve, a pipe and a blank end, a pipe and fluid processing equipment (e.g. a pump), or connected fluid processing equipment.

The gasket assembly may be for use in a wide range of environments. The gasket may be used in subsea environments, such as in the oil and gas field, or top-side environments - for example on a rig or on land, for example in a factory.

The duct may comprise a tube, which may be relatively thin or slender compared to the gasket. If the duct or the connection between the duct and the gasket is damaged, it may no longer be possible to test the integrity of the seal prior to use. In aspects according to the present disclosure, the brace and protective collar may take up, or be configured to take up mechanical loading applied to the gasket assembly in place of the duct, thus preventing or minimising risk of the duct being damaged. The gasket assembly may provide or be configured to provide a load transmission path that excludes the duct. The load transmission path may allow loads to be transmitted from external equipment attached to the gasket assembly or the environment to the mating surfaces between which the gasket assembly is installed, without being taken up by the duct.

The brace and protective collar may withstand or be configured to withstand loads applied to the gasket assembly during transport and installation of the gasket assembly. The gasket assembly may be made of metal and, as such, may be relatively heavy. The brace and collar may provide convenient points for an installer to grip when carrying and installing the gasket assembly, without risking damage being done to the duct. Additionally, as discussed in more detail below, the brace is configured to assist with aligning and supporting the gasket assembly during installation - further increasing the ease with which the device can be installed.

The brace and protective collar may withstand or be configured to withstand loads applied to the gasket assembly during testing of the gasket assembly. The external pressure testing equipment may have a screw-type fitting to connect to the gasket. Should the connection torque applied to connect the fitting of the pressure testing equipment be taken up solely by the duct, the duct may be damaged. Similarly, axial forces applied to connect a push-type fitting may also cause damage if taken up solely by the duct. The protective collar and brace may take up or be configured to take up these loads in place of the duct. The protective collar may act as an anchor point, to which external equipment can be mechanically connected as the external equipment (e.g. pressure testing equipment) is put in fluid communication with the duct. This may avoid significant loading being applied to the duct. Accordingly, in some examples, the protective collar may be an anchor collar, or a load collar.

Once the external pressure testing equipment is connected to the gasket assembly, the weight of the pressure testing fitting and associated tubing may be supported by the gasket assembly. Depending on the orientation of the gasket assembly, this weight may be exerted in an axial or transverse direction with respect to the axis of the duct. The brace and protective collar may be configured to support this weight, in place of the duct

Similar loading may be applied as the external pressure testing equipment is disconnected and a cap is connected to the gasket assembly.

The gasket may be ring-shaped. The gasket may define an axis. The axis may be aligned with that of the component for which the gasket is providing a seal.

The cross-section of the gasket may be polygonal. The cross-section of the gasket may be substantially rectangular. The gasket may comprise tapered edges in cross-section. The gasket may comprise one or a plurality of sealing faces configured to engage the mating surfaces and for providing the seal. The gasket may be made out of metal. The gasket may comprise a Kammprofile. The gasket may comprise a grooved, undulating, or ribbed surface. The gasket may further comprise a layer of graphite, composite or polymer on one side, or both sides, of the grooved or ribbed surface. Such an arrangement may provide improved compression and recovery characteristics.

The size and characteristics of the gasket may vary depending on the nature of the mating surfaces between which a seal is required, and the operating characteristics of the fluid for which the seal is required - e.g. the pressure, temperature and chemical characteristics of the operating fluid.

The gasket may be configured to provide a seal between adjacent pipes - for example in an oil and gas well - or to provide a seal at an end stop of a pipe.

The gasket assembly may be, provide or define a reverse integrity gasket. That is, the gasket assembly may be configured to facilitate testing of the seal integrity from the reverse side of the seal. The integrity of the seal may be tested under service conditions, although applied by external pressure testing equipment to the reverse side of the seal.

The port may be for allowing the passage of fluid therethrough. The port may be arranged to pressure test the seal provided by the gasket. The port may be arranged on, or adjacent, a sealing face of the gasket. The port may be arranged on an axial-facing surface of the gasket. The gasket may comprise a plurality of ports. The gasket may comprise a port on both or opposing axial sides of the gasket.

The duct may provide a fluid passageway or flow path. The duct may be in fluid communication with the port, for example to permit fluid to flow through the duct and out of the port. The duct may be or comprise a tube.

The duct may be arranged to extend radially from the gasket. The duct may comprise first and second ends. A first end of the duct may be connected to the gasket. The first end of the duct may be connected to an outer circumferential surface of the gasket. The second end of the duct may be distal from the gasket. The protective collar may be located intermediate the first and second ends of the duct.

During installation and testing of the gasket assembly it may be necessary to connect and disconnect external testing equipment to the duct (e.g. the distal end thereof). In order to facilitate this, the duct may extend beyond the boundary of the mating surfaces when in an installed configuration, in order to simplify the process of connecting and disconnecting fittings to the duct and avoid certain fitting components fouling on the mating surfaces, for example. The length of duct may be such that the duct (e.g. the second end thereof) extends out from the mating surfaces between which the gasket is installed, in order to facilitate easy installation and testing. In specific examples according to the disclosure, the length of the duct may be over 50mm, 100mm or 150mm. However, the duct may be of any suitable length.

The first end of the duct may be welded to the outer circumferential surface of the gasket, for example laser welded. Laser welding provides a robust connection between the duct and the gasket and thus reduces the risk of damage to the connection resulting in a leak that prejudices the ability of the gasket to pressure test the integrity of the seal. Laser welding results in a weld with a smaller heat-affected zone, and thus may be stronger and less prone to failure. Other types of welding may also be suitable for use with the present disclosure, for example MIG welding, arc welding and TIG welding.

In addition to welding, other types of joining methods may also be suitable for use with the present disclosure, for example mechanical connection methods, such as a screw connection. In other examples, the first end of the duct may be integral with the gasket. For example, if the gasket assembly is manufactured using additive manufacturing the duct and gasket may be formed as a single integral part.

The protective collar may surround, or be configured to surround the duct, either partially or entirely. The protective collar may be configured to be slid onto the duct, clamped around the duct (e.g. using a clam-shell arrangement), or manufactured directly onto the duct (e.g. using additive manufacturing). When manufactured directly onto the duct, the duct and protective collar need not be fixedly connected or integral. For example, additive manufacturing methods may allow the protective collar and duct to be manufactured together, but as separate parts that are not integral.

As noted above, external pressure testing equipment may have a screw fitting for connection to the gasket assembly for testing. Connection of this screw fitting may exert a torque on the gasket assembly. Such a torque, if taken up by the duct, may damage the duct. In gasket assemblies according to the present disclosure, the protective collar may comprise a connector configured to connect to external equipment. The protective collar may be configured to take up the torque exerted on the gasket assembly during connection to external equipment. In order to protect the duct, the protective collar may be configured to distribute the applied torque away from the duct (e.g. via the brace).

The protective collar may be configured such that it cannot apply torque to the duct. The protective collar may define an internal bore. The diameter of the internal bore may be configured to prevent the protective collar from exerting a torque on the duct. The diameter of the internal bore may be substantially equal to, or larger than, an external diameter of the duct. The protective collar may be configured not to provide an interference fit with the duct. The internal bore of the protective collar may provide a clearance fit with the duct.

In one example the duct may have an outside diameter of 3.175mm. The internal bore of the protective collar may be 3.2mm, 3.5mm, 4mm or greater than 4mm.

The protective collar may be configured to brace the duct. The protective collar may be configured to brace the duct to resist deflection or bending (e.g. in a transverse direction) of the duct. The protective collar may be located, or locatable, intermediate the first and second ends of the duct. The protective collar may be located towards an axial midpoint of the duct. Locating the protective collar towards a midpoint of the duct minimises the maximum possible deflection of the duct, thus reducing the chance that such a deflection may result in damage to the duct or its connection to the gasket.

The protective collar may comprise a mechanical connector. The mechanical connector may facilitate mechanical connection of the protective collar to an additional component. The additional component may, or may not, form part of the gasket assembly. Examples of additional components to which the mechanical connector may be connected include a protective cap and external equipment. The mechanical connector may be configured to mechanically secure the gasket assembly to external equipment such as pressure-testing equipment.

The mechanical connector may be for mechanically securing the gasket assembly to external testing equipment and for taking up axial, transverse and/or rotation loads exerted on the gasket assembly during connection and testing. As noted above, attaching and detaching the testing device may cause loads to be exerted on the connection between the gasket assembly and the external equipment. The mechanical connector and protective collar may be configured to take up these loads in place of the duct, thus avoiding damage to the duct.

The mechanical connector may comprise an internal or external thread. Alternatively, the mechanical connector may comprise a quick, or smart, connector. The mechanical connector may comprise male or female push-type connector. The mechanical connector may be a bayonet-type fitting, for example requiring an axial and rotational movement to connect.

As the gasket may be used in subsea environments, a quick-connect, or smart, mechanical connector - in which an axial load is applied to achieve connection rather than relative rotation - may ease installation. When operating subsea, given the environment and quantity of other components, a push-type mechanical connector such as a quick-connect may ease installation, maintenance and testing, as a user may be able to more easily and quickly connect and disconnect the gasket assembly to and from testing equipment, for example.

Use of a push-type mechanical connector may also reduce fatigue on the fitting caused by repetitive testing - for example as may be required to ensure reliable operation of the gasket assembly.

The protective collar may comprise a connection arrangement for engaging the brace. The connection arrangement may secure, or be configured to secure the protective collar to the brace. The connection arrangement may provide or be configured to provide a mating engagement with the brace.

The protective collar may comprise a slot for receiving a portion of the brace. The connection arrangement may comprise a slot, configured to receive a portion of the brace. The brace may comprise a corresponding projection for being received in the slot. The provision of a slot for receiving a portion of the brace may provide a convenient arrangement for providing an engagement between the brace and the protective collar.

The connection arrangement may comprise one of a male and female component, configured to mate with the other of the male and female component on the brace. The connection arrangement may comprise a thread, bayonet arrangement, and/or interlocking arm for engagement with a complementary arrangement on the brace.

As will be discussed further below, the protective collar may transfer loads to the brace. The protective collar may act as an anchor. The protective collar may provide an attachment point via which external equipment can be connected to the gasket assembly. By providing a convenient attachment point, such external equipment need not be connected to the duct directly.

The protective collar may be a brace for the duct. The protective collar may be configured to resist or limit transverse deflection of the duct during use. The protective collar may be configured to take up transverse loads applied to duct to the brace.

The brace may be or comprise a frame, for example a structural frame configured to take up mechanical loads applied to the protective collar and/or duct. The brace may be configured to take up loads applied to the protective collar. The brace may be configured to transmit loads applied to the protective collar to the gasket or mating surfaces. The brace may be configured to resist loads applied to the protective collar (e.g. torques, axial loads and transverse loads (with respect to the axis of the duct)). The brace may be configured to withstand rotational, axial and/or transverse forces applied to the protective collar with respect to the axis of the duct.

The brace and protective collar may be configured such that forces applied during handling, assembly, installation and testing of the gasket, as discussed above, are transferred away from the duct. The brace and protective collar may be configured to provide a load transmission path from to the gasket and/or mating surfaces that excludes the duct.

The brace may be configured to cooperate with the protective collar to protect the duct from loads applied to the gasket assembly. The brace may allow the loads applied to the duct and/or protective collar to be transferred away from the duct - for example to the gasket or the mating surfaces between which the gasket assembly is installed.

The brace is isolated from the duct. The brace may be separate to, separated from, the duct. The brace may be configured such that it cannot apply loads directly to the duct or a connection between the duct and the gasket.

The brace may resist, be configured to resist rotation of the protective collar, by taking up torque applied to the protective collar. Such torque may be applied to the protective collar during connection of the gasket assembly to external testing equipment, as discussed above.

The brace may engage or be configured to engage the gasket. Engagement of the brace and gasket may allow load to be transferred therebetween. Loads applied to the protective collar may thus be transferred to the gasket via the brace. The gasket may be secured between the mating surfaces, providing a robust and reliable route for supporting loads applied to the gasket without damaging the duct, as the duct may not form part of the load transmission path.

The brace may be configured to engage and transfer loads to the gasket or one of the mating surfaces between which the gasket assembly is installed.

The brace may comprise a plate. The plate may be thinner than the gasket. The brace partially surrounds the gasket. The brace may be configured to partially surround the gasket. The brace surrounds the gasket in the plane of the gasket. The plate may be thinner than the gasket in an axial direction (with respect to the gasket axis).

The brace may be made of sheet metal.

The brace may define a central open section for receiving the gasket. The gasket may comprise a brace receiving arrangement. The gasket may comprise a circumferential slot or channel for receiving and locating the brace. The brace may define a channel in which the duct may be located during use. The channel may be configured note to interfere with the duct during use.

The brace may comprise a support member. The brace may comprise two support members arranged parallel to, and flanking, the duct. The support members may engage or be configured to engage the protective collar.

The brace, or the support members of the brace, may comprise an attachment device (or plurality of attachment devices) and the protective collar may comprise a corresponding attachment device (or plurality of attach devices) for mechanically securing the protective collar to the brace. The attachment devices may improve load transfer between the brace and the protective collar. The attachment devices may be corresponding holes, a mating hole and lug, interlocking surface features, or any other mechanically engaging features.

The attachment devices may be positioned at a location at which a portion of the brace enters a slot of the protective collar.

The brace (for example a profile defined by the brace) may be configured to align, or locate, the gasket assembly during use. The brace may comprise an alignment profile. The alignment profile may be a portion of the brace. The alignment profile may be configured to align the gasket assembly during use - for example on the face of a mating surface. The support members may be configured to locate or align the gasket assembly during use.

The brace may be configured to support the gasket assembly in position adjacent a mating surface (e.g. in position on a flanged mating surface before the second mating surface is connected).

The brace may be shaped such that it receives, abuts or mates with features of the mating surfaces between which it is installed, in order to correctly align the gasket with the corresponding sealing surfaces of the mating surfaces.

The brace may comprise radial sections, radiuses or recessed areas for receiving one, two, or more than two, bolts during installation. This may particularly be the case when the gasket is for use in providing a seal between flanged mating surfaces. Locating bolts within certain recesses of the brace may ensure the gasket is correctly aligned with the associated mating surfaces.

The gasket assembly may further comprise a cap. The cap may be connected to, or configured to connect to, the protective collar. The cap may be connected to, or configured to connect to, the mechanical connector of the protective collar. The cap may protect an end of the duct. For example by providing a physical barrier between the end of the duct (and any associated fitting) and the environment. The cap may be configured to protect the end of the duct (and any associated fitting) from mechanical damage caused by impacts from neighbouring equipment or the environment. If subject to such impacts, the cap may transfer the impact load to the protective collar and the brace, rather than the duct, thus protecting the duct.

The cap may be shaped so as to minimise interference with neighbouring equipment and the environment. The cap may be domed. The cap may comprise a rounded shape. Such an arrangement may reduce the likelihood of the cap snagging on neighbouring equipment such as tubing, pipes, guidelines, guidewires or other such components. This may be of particular interest when used in a subsea environment.

The cap may also be configured to protect the end of the duct from corrosion or other damage caused by the environment in which the gasket is installed. The cap may provide a seal when connected to the protective collar. The cap may seal the interior of the cap (e.g. the end of the duct and any associated fitting) from the exterior of the cap.

In other examples, the cap may be open to the environment. The cap may allow fluid communication between the interior and exterior of the cap when connected to the protective collar. This may allow any trapped fluids to drain from the cap and prevent the cap from catching fluids. This might have particular applications in subsea environments.

The cap may be configured to cover and protect an end of the duct and a fitting installed thereon during use.

The gasket assembly may further comprise a fitting. The fitting may be connected to, or configured to connect to, an end of the duct. The fitting may be configured to facilitate connection of an external device to the duct.

The fitting may be configured to control, provide and/or prevent a fluid connection between the duct and external equipment (e.g. testing equipment). The fitting may seal, or be configured to seal the duct. The fitting may seal or be configured to seal the duct until such time as access to the duct is required, for example to connect external equipment to test the integrity of the seal. The fitting may additionally, or alternatively, be configured to facilitate fluidic connection between the duct and external equipment, such as external pressure equipment usable to test the integrity of the seal.

The fitting may be configured to only transfer axial loads to the duct when being connected or disconnected from the duct or an external device.

The fitting may be a compression fitting. The fitting may be a push fitting. The fitting may comprise a screw or bayonet-type engagement mechanism.

The fitting may comprise a first part and a second part. The first part and second part may be configured to engage to seal the duct.

The fitting may be configured such that, when the gasket assembly is to be connected to external pressure-testing equipment, the external equipment may be connected to the first part of the gasket assembly fitting.

The fitting may comprise a quick-connect, or smart, fitting. The fitting may comprise first and second quick-connect fitting parts. The first quick-connect fitting part may be configured to engage the second quick-connect fitting part to seal the duct. The first quick-connect fitting part may be configured to connect to external equipment - for example pressure testing equipment.

As the gasket may be used in subsea environments, a quick-connect, or smart, fitting - in which an axial load is applied to achieve connection rather than relative rotation - may facilitate more easy installation. When operating subsea, given the environment and quantity of other components, a push-type fitting such as a quick-connect may ease installation, maintenance and testing, as a user may be able to more easily and quickly connect and disconnect the gasket assembly to and from testing equipment, for example.

Use of a push-type fitting may also reduce fatigue on the fitting caused by repetitive testing - for example as may be required to ensure reliable operation of the gasket assembly.

Each of the first fitting part and second fitting part may comprise an outer housing and an inner ferrule. The outer housings may comprise complementary threads for connecting the fitting parts together. Each of the inner ferrules may be free to rotate relative to its respective outer housing. The inner ferrules may be configured to engage each other and the duct as the outer housing parts are threadably engaged. As the inner ferrules are rotatable relative to the outer housings the inner ferrules move axially with respect to the duct as the first fitting part and second fitting part engage. As such, no torque is applied to the duct by the fitting.

The first fitting part may be configured to connect to a fitting of external equipment.

An aspect of the present disclosure relates to a gasket system comprising a gasket assembly as described anywhere herein. The gasket assembly may be for providing a seal between two mating surfaces. The gasket system may further comprise a pressure testing or monitoring device configured to connect to be in fluid communication with the duct to test a seal provided by the gasket.

An aspect of the present disclosure relates to a method of providing a seal between two mating surfaces. The method may comprise installing a gasket assembly as described herein between two mating surfaces

Examples according to the disclosure may be formed using an additive manufacturing process. A common example of additive manufacturing is 3D printing; however, other methods of additive manufacturing are available. Rapid prototyping or rapid manufacturing are also terms which may be used to describe additive manufacturing processes.

As used herein, "additive manufacturing" refers generally to manufacturing processes wherein successive layers of material(s) are provided on each other to "build-up" layer-by-layer or "additively fabricate", a three-dimensional component. This is compared to some subtractive manufacturing methods (such as milling or drilling), wherein material is successively removed to fabricate the part. The successive layers generally fuse together to form a monolithic component which may have a variety of integral subcomponents. In particular, the manufacturing process may allow an example of the disclosure to be integrally formed and include a variety of features not possible when using prior manufacturing methods.

Additive manufacturing processes typically fabricate components based on three-dimensional (3D) information, for example a three-dimensional computer model (or design file), of the component.

Accordingly, examples described herein not only include products or components as described herein, but also methods of manufacturing such products or components via additive manufacturing and computer software, firmware or hardware for controlling the manufacture of such products via additive manufacturing.

The structure of one or more parts of the product may be represented digitally in the form of a design file. A design file, or computer aided design (CAD) file, is a configuration file that encodes one or more of the surface or volumetric configuration of the shape of the product. That is, a design file represents the geometrical arrangement or shape of the product. Design files, a computer program or computer executable instructions describing the design or printing instructions may be stored in a transitory or non-transitory computer readable storage medium (e.g., memory, storage system, etc.) storing code, or computer readable instructions, representative of the product to be produced. Accordingly, by controlling an additive manufacturing apparatus according to the computer executable instructions, the additive manufacturing apparatus can be instructed to print out one or more parts of the product.

In light of the above, examples include methods of manufacture via additive manufacturing. This includes the steps of obtaining a design file representing the product and instructing an additive manufacturing apparatus to manufacture the product in assembled or unassembled form according to the design file. The additive manufacturing apparatus may include a processor that is configured to automatically convert the design file into computer executable instructions for controlling the manufacture of the product.

An aspect of the present disclosure not describing part of the claimed invention relates to a kit of parts for providing a gasket assembly; the kit of parts comprising: a gasket for providing a seal between two mating surfaces; the gasket comprising a port for testing a seal provided by the gasket; a duct in fluid communication with the port; a protective collar configured to surround the duct; and a brace configured to engage the protective collar such that load is transmitted between the protective collar and the brace.

In some examples according to the disclosure the duct may be provided as a separate part for connection to the gasket. In other examples according to the disclosure, the duct may be provided as an integral, or permanently connected, part of the gasket.

An aspect of the present disclosure relates to a computer program comprising computer executable instructions that, when executed by a processor, cause the processor to control an additive manufacturing apparatus to manufacture a gasket assembly, or a kit of parts for a gasket assembly, as described herein or any subcomponent of the gasket assembly as described herein.

An aspect of the present disclosure relates to a method of manufacturing a gasket as described herein via additive manufacturing. The method may comprise obtaining an electronic file representing a geometry of a product. The product may be the gasket assembly as described herein. The method may further comprise controlling an additive manufacturing apparatus to manufacture, over one or more additive manufacturing steps, the product according to the geometry specified in the electronic file.

### BRIEF DESCRIPTION OF DRAWINGS

Figure 1A shows a first gasket assembly;
Figure 1B shows a second gasket assembly;
Figure 2 shows the first gasket assembly in a disassembled form;
Figures 3 to 6 show a range of different braces for use in gasket assemblies according to the disclosure;
Figure 7 shows the first gasket assembly with a protective cap applied;
Figure 8 shows the second gasket assembly during installation in a pipe joint;
Figure 9 shows the second gasket assembly in a pipe joint;
Figure 10 is a side view of a pressure connection to a gasket assembly installed in a pipe joint;
Figure 11 shows an installed gasket assembly connected to pressure testing equipment; and
Figure 12 is a schematic cross-section of part of a gasket assembly installed in a pipe joint.

### DETAILED DESCRIPTION OF DRAWINGS

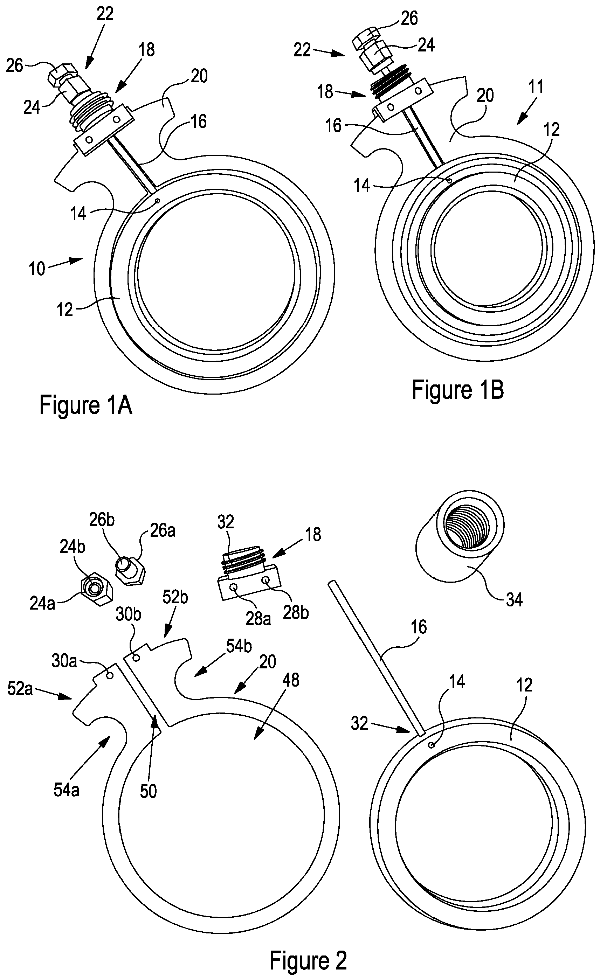

Figures 1A and 1B show gasket assemblies 10, 11 according to the present disclosure. Both gasket assemblies 10, 11 are largely similar and so will be described together using the same reference numerals. The main differences between the two gasket assemblies 10, 11 are in the sealing face of the gaskets 12, with the gasket of Figure 1B comprising a Kammprofile, and thus comprising a grooved, undulating, or ribbed surface and a surface layer of a second material on one side of the grooved or ribbed surface. In any case, the principles and developments discussed herein apply equally to both types of gasket assembly 10, 11.

The gasket assemblies 10, 11 of Figures 1A and 1B comprise a gasket 12, which in these examples is ring-shaped. The gasket 12 is arranged to be sandwiched between sealing surfaces of fluid-handling components - for example adjacent pipes, valves, end caps pumps, or fluid processing equipment. The gasket comprises one or more sealing face. The gasket 12 is largely responsible for providing the sealing function of the gasket assembly. In particular, the gasket 12 of Figures 1A and 1B is configured to provide a seal between flanged mating surfaces.

The gasket assemblies 10, 11 of Figures 1A and 1B are reverse integrity gaskets facilitating leakage testing after installation and before use. Such gasket assemblies 10, 11 may allow a user to apply a pressure to the reverse side of the seal before use, using external pressure testing equipment, in order to test the integrity of the seal. The gasket 12 comprises a port 14. The port 14 of these examples is arranged on, or adjacent, a sealing surface of the gasket 12. The port 14 connectable to the external pressure testing equipment to enable the application of a pressure to the sealing surface. In Figures 1A and 1B, the port 14 is arranged on an axially-facing surface of the gasket 12, thus the port 12 faces axially.

The port 14 is configured to allow fluid communication between an internal region of the gasket seal and pressure testing equipment during and after installation of the gasket assembly 10, 11. This fluid communication allows the integrity of the seal provided by the gasket assembly 10, 11 to be tested. The gasket assemblies 10, 11 may be tested after installation of the gasket assembly 10, 11, before use of the gasket assembly and, optionally, at intervals during the operational lifetime of the gasket in order to ensure seal integrity.

Although only a single port 14 is depicted in the Figures, a corresponding port 14 is arranged on the reverse side of the gasket 12.

The gasket assembly 10, 12 further comprises a duct 16, which in the present example is provided by a hollow tube. The duct 16 is in fluid communication with the port 14, thus fluid can flow between the port 14 and the duct 16. The duct 16 may act as a conduit for pressurised gas when testing the integrity of a seal. Typically, pressurised nitrogen will be used to test the seal integrity, although any other fluid may be used. The duct 16 may be configured to connect to external pressure testing equipment, such as a compressor, pump etc.

In the gasket assembly 10, 11 the duct 16 is connected at one end to the gasket 12. This connection is on an outer circumferential surface of the gasket 12. In the depicted gasket assemblies 10, 11 the duct 16 is laser welded to the gasket 12. Laser welding may provide a connection with increased robustness and strength characteristics.

Other connections are possible - for example a screw-fit. In some examples according to the disclosure, for example if the part is additively manufactured, the duct 16 may be integral with the gasket 12.

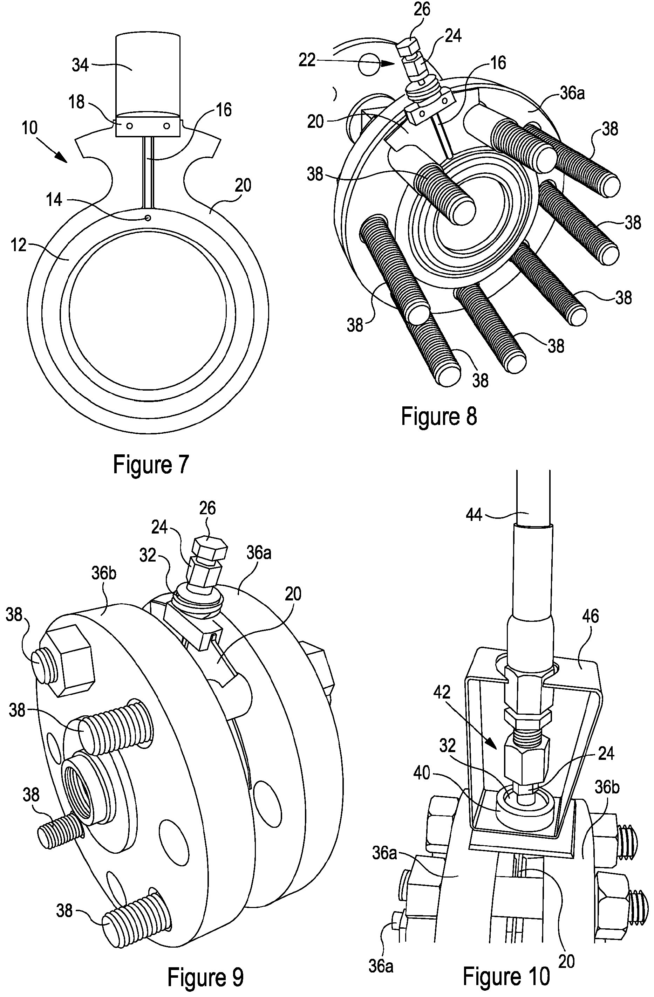

In the depicted examples the duct 16 is a cylindrical tube. The duct 16 extends radially from the outer surface of the gasket 12 and terminates in an end distal from the gasket 12. In other examples the duct 16 may extend in a direction other than radially, equally the duct 16 may not be straight and may instead be curved, angled or bent. As shown schematically in Figure 8, the internal passage of the duct 16 is in fluid connection with the ports 14.

A protective collar 18 is arranged around the duct 16. The protective collar 18 is arranged to surround the duct 16. The protective collar 18 has an internal bore configured to receive the duct 16 in use. In the depicted gasket assemblies 10, 11 the protective collar 18 is configured to be slid onto the duct 16, although other arrangements and attachment methods are possible and within the scope of the present disclosure.

The protective collar 18 and brace 20 are configured to receive and transfer loads away from the duct 16 to avoid damage to the duct 16 during transport, installation, testing, use and disassembly.

The gasket assembly 10 is relatively heavy and so loads applied when handling the gasket assembly 10 may damage the duct 16 if the gasket assembly is handled carelessly. The brace 20 and protective collar 18 provide convenient points for an installer to grip when carrying and installing the gasket assembly, without risking damage being done to the duct.

During connection of external pressure testing equipment, torsional, axial and transverse loads may be applied to the gasket assembly (depending on the type of fittings provided). The protective collar 18 and brace 20 are configured to take up these loads in place of the duct 16 and distribute them (e.g. to the mating surfaces between which the gasket is installed).

Once the external pressure testing equipment is connected to the gasket assembly 10, the weight of the pressure testing fitting and associated tubing may be supported by the gasket assembly 10. Depending on the orientation of the gasket assembly 10, this weight may be exerted in an axial or transverse direction with respect to the axis of the duct. The brace 20 and protective collar 18 are also configured to support this weight, in place of the duct.

In the shown examples, the protective collar 18 is configured to be freely rotatable about the duct 16. The protective collar 18 - e.g. the internal bore thereof - has a clearance fit with the duct 16.

When the gasket assembly 10, 11 is in an assembled form, the protective collar 18 is located axially between the two ends of the duct 16. The protective collar 18 may be located towards a midpoint of the duct 16, or closer to one end than the other. Locating the protective collar 18 intermediate the ends of the duct 16 may improve the ability of the protective collar 18 to effectively brace the duct 16 to minimise undesirable deflection thereof and thus protect the integrity of the duct 16 and its interface with the gasket 12.

The protective collar 18 comprises a connector. The connector is a mechanical connector for conveying mechanical load. The connector is for interfacing with an additional component. The additional component may be a protective cap or external equipment. The external equipment may be for use with the gasket during transportation, installation, testing, use or removal of the gasket. Examples of external equipment may include pressure testing equipment and installation equipment. In the present examples the connector comprises an external thread 32. However, in other examples the connector 32 may comprise an alternative connection arrangement, for example a quick-connect fitting, a male or female push-fitting, or a bayonet-type fitting.

The gasket assembly 10, 11 also comprises a brace 20. The brace 20 is configured to transfer load between the protective collar 18 and the rest of the gasket assembly 10, 11 avoiding the duct 16. The brace 20 is therefore configured to take up the majority of the mechanical loads applied to the gasket assembly 10, 11 - and in particular the protective collar 18 - during transport, installation, testing, use and disassembly of the gasket assembly, protective collar as discussed above.

The brace 20 is isolated from the duct 16, in that it is not able to transfer any loads directly to the duct 16 or the connection between the duct 16 and the gasket 12.

The brace 20 engages the protective collar 18 to transfer loads between the brace 20 and the protective collar 18. The brace 20 is configured to take up loads applied to the protective collar 18 by the environment, additional components (e.g. the cap) or external equipment (e.g. pressure testing device), or, in certain cases, applied to the protective collar 18 by the duct 16. The brace 2 is arranged such that the loads applies to the brace 20 may be transferred to the gasket 12 and mating surfaces between which the gasket assembly 10, 11 is located (e.g. transferred to the connected pipes or fixings thereof).

The brace 20 has a thickness less than that of the gasket 12, such that the flat axial-facing surfaces of the plate are not responsible for providing any sealing function during use. The brace 20 of the present examples is a plate. In this example the plate is made of sheet metal.

The brace 20 of Figures 1A and 1B is generally circular, or horseshoe-shaped. The brace 20 is configured to receive the gasket 12 in a central open section 48 (see Figure 2). The brace 20 partially surrounds the gasket 12. The gasket 12 comprises a slotted channel around at least part of its outer circumference in which the brace 20 is received.

The brace 20 defies a channel 50 in which the duct 16 is located during use. The brace 20 is configured to avoid direct contact between the duct 16 and the brace 20.

The brace 20 comprises two support members 52a, 52b extending away from the central open section 48. These support members are configured to extend parallel to, and either side of, the duct 16 during use. The support members 52a, 52b of the brace 20 of the present example are configured to engage the protective collar 18.

In the gasket assembly 10, 11 of Figures 1A and 1B, the protective collar 18 comprises a connection arrangement for engaging the brace in the form of a slot into which an edge of the brace 20 slides during assembly. This arrangement allows the brace 20 to resist loads applied to the protective collar 18. Such an arrangement allows the brace 20 to resist axial, transverse and rotational loads applied to the protective collar 18.

The gasket assembly 10, 11 further comprises a fitting 22. The fitting 22 is provided on the end of the duct 16 distal from the gasket 12. The fitting 22 is for facilitating connection to external pneumatic (or hydraulic) equipment - for example to test the integrity of the provided seal. The fitting 22 is also configured to close and seal the duct 16 when required.

The fitting 22 is configured such that it does not transfer mechanical loads to the duct 16. The fitting 22 is configured to only transfer axial loads to the duct 16 (i.e. forces aligned with a longitudinal axis of the duct 16). The fitting 22 of the present example comprises a first part 24 and a second part 26. The first part 24 and second part 26 are configured to engage to seal the duct 16.

When the gasket assembly 10, 11 is to be connected to external pressure-testing equipment, the second part 26 of the fitting 22 may be removed and a fitting part of the external equipment may be connected to the first part 24 of the gasket assembly fitting 22.

In the gasket assembly 10, 11 of Figures 1A and 1B each of the first fitting part 24 and second fitting part 26 comprises an outer housing 24a, 26a and an inner ferrule 24b, 26b. The outer housings 24a, 26a comprise complementary threads for connecting the fitting parts 24, 26 together. Each of the inner ferrules 24b, 26b is free to rotate relative to its respective outer housing 24a, 26a. The inner ferrules 24b, 26b are configured to engage each other and the duct 16 as the outer housing parts 24a, 26a are threadably engaged. As the inner ferrules 24b, 26b are rotatable relative to the outer housings 24a, 26a the inner ferrules 24b, 26b only move axially with respect to the duct 16 as the first fitting part 24 and second fitting part 26 engage. As such, no torque is applied to the duct 16 by the fitting 22.

When the gasket assembly 10, 11 is to be connected to external equipment (e.g. pressure testing equipment) a similar process may occur. A fitting part of the external equipment may comprise an outer housing and inner ferrule similar to those of the second fitting part 26 of the gasket assembly fitting 22. As such, the parts of the fitting interfacing with the duct 16 only move axially and no torque is applied to the duct 16 when external equipment is connected to the fitting 22 of the gasket assembly 10, 11.

The above-described fitting 22 of the depicted examples is a compression fitting. In other examples, however, the fitting 22 may be a push-fitting, not requiring rotation of any of the fitting parts. Any fittings used with examples of the present disclosure may be configured to avoid the application of torque to the duct 16.

In some examples according to the disclosure, the fitting may comprise a quick-connect fitting having first and second quick-connect fitting parts. The first quick-connect fitting part may be configured to engage the second quick-connect fitting part to seal the duct, when required. When testing of the seal integrity is required, the first quick-connect fitting part may be used to connect to external pressure testing equipment.

Turning now to Figure 2, the gasket assembly 10 of Figure 1A is shown in a disassembled form.

As described above, the brace 20 comprises a central open section 48 for receiving the gasket 12 and two support members 52a, 52b extending away from the central open section 48, which defined a channel 50 thereinbetween in which the duct 16 may be located during use.

The profile of the brace 20 - and in this example the profile of each support member 52a, 52b - is configured to assist in locating the brace 20, and thus the gasket assembly 10 in a joint during use, specifically a joint between two flanged mating surfaces (e.g. in a connection between flange-ended pipes). The brace 20 of Figure 2 defines two radial sections 54a, 54b that are spaced and sized to receive corresponding bolts of a pipe joint during use. The profile of the brace 20 - and in this example the two radial section 54a, 54b - ensure correct positioning of the gasket assembly 10 in a flanged pipe joint. Figure 8 shows the radial sections 54a, 54b receiving bolts and thus aligning the gasket assembly 10 within a pipe joint.

The brace 20 also comprises two attachment devices in the form of holes 30a, 30b arranged to align with two corresponding attachment devices in the form of holes 28a, 28b in the protective collar 18 during use. These holes 28a, 28b, 30a, 30b are configured to optionally secure the protective collar 18 with respect to the brace 20, for example by inserting rivets, screws or locking bars through the pairs of aligned holes 28a,30a and 28b, 30b. This may also improve the load transfer performance between the protective collar 18 and the brace 20.

In addition to the aforementioned features, the gasket assembly of Figure 2 also comprises a cap 34. The cap 34 is for protecting the end of the duct 16 and/or the fitting 22 - for example from corrosion as well as mechanical damage during transportation, installation and use. For example, the any impact or load applied to the cap 34 will be transferred to the protective collar 18 and brace 20, rather than to through the duct 16.

The cap 34 is configured to connect to the protective collar 18. In this example, the cap 34 comprises an internal thread configured to engage the external thread of the protective collar 18.

The gasket assembly 10 is shown in an assembled form with the cap in Figure 7.

In other examples of the gasket assembly 10, the cap may be domed, or have a rounded profile - e.g. with rounded edges. A rounded cap may reduce the chance of the cap snagging on adjacent equipment or the environment, thus reducing the likelihood of associated damage being done to the gasket assembly or neighbouring equipment.

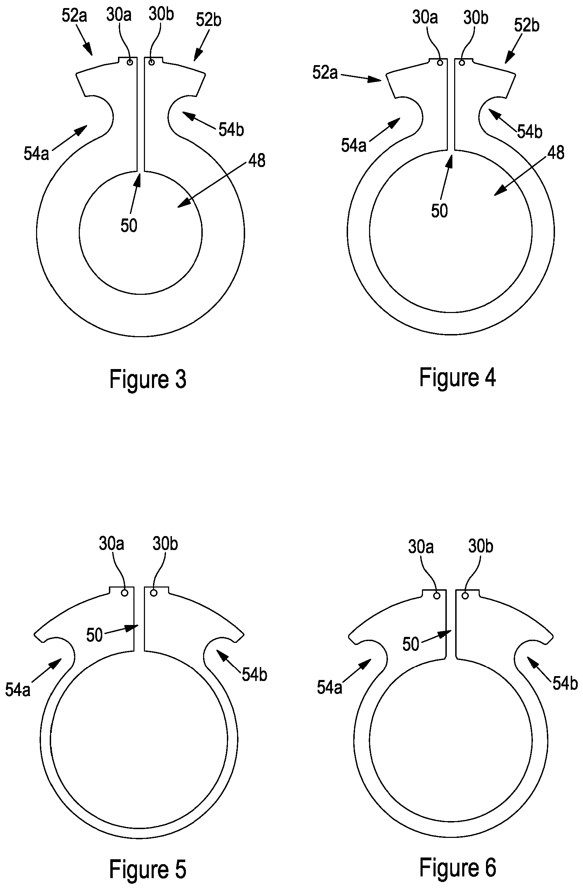

Figures 3 through 6 illustrate a range of braces 20 for use with gasket assemblies according to the disclosure. The braces are for use with different gaskets and different arrangements of mating surfaces - e.g. different sized and configured flanged pipe ends. As can be seen, the dimensions and arrangement of radial sections 54a, 54b vary to suit the chosen environment.

Figure 7 depicts an assembled gasket assembly 10 with the cap 34 connected to the protective collar 18.

Figure 8 shows the gasket assembly 10 during installation between two flanged mating surfaces - such flanged mating surfaces may be present in a join between pipes in an oil and gas well. The first flanged mating surface 36a has eight bolts 38 extending from an end face thereof. The brace 20 of the gasket assembly 10 is shaped so as to receive two adjacent bolts 38 in order to align the gasket assembly 10 on the flanged mating surface 36a. Such an alignment function helps ensure accurate and robust installation of the gasket assembly 10, and simplifies the installation process.

Figure 9 depicts the gasket assembly 10 located between the first flanged mating surface 36a and a second flanged mating surface 36b. The gasket is entirely located between the two flanged mating surfaces 36a, 36b, but, due to the length of the duct 16, the protective collar 18, duct 16 and fitting 22 at least partially extend out from the circumference of the flanged mating surfaces, so as to be accessible for a user installing, testing or disassembling the joint.

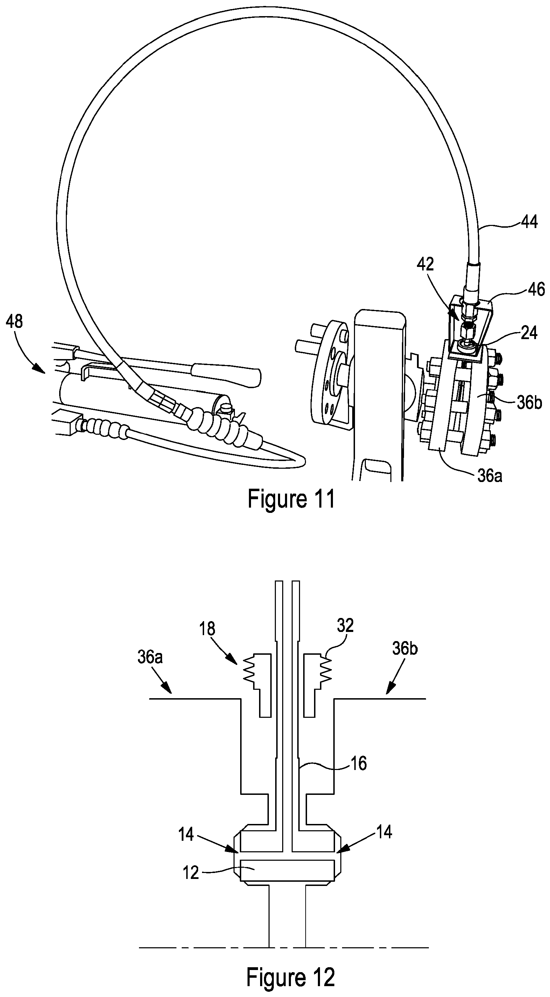

Figure 10 depicts a connection between a gasket assembly 10 and pressure testing equipment 48 and Figure 11 shows the gasket assembly 10 connected to the pressure testing equipment 48. A frame 46 is installed around the connection in order to provide mechanical support and alignment. The frame 46 is threadably engaged to the connector 32 of the protective collar 18. During connection of the depicted testing equipment, torsional as well as axial loads (with respect to the axis of the duct 16) may be applied to the gasket assembly 10. During testing, axial and transverse loads may be applied to the gasket assembly 10 as the weight of the connecting equipment and, to a degree, the pressure testing equipment may be supported by the gasket assembly 10. As the frame 46 is connected to the protective collar 18, and the protective collar 18 is arranged to brace the duct 16, the majority of the mechanical loading experienced by the gasket during connection and testing of the seal integrity is transferred to the mating surfaces via the protective collar 18 and brace 20, rather than through the duct 16.

The fitting 42 of the pressure testing equipment 48 is connected to the first fitting part 24 of the gasket assembly 10 as described above. In the present example a screw connection is illustrated. However, in other examples a push or quick-connect fitting may be used.

Once connected, the pressure testing equipment 48 is fluidically connected to the port 14 adjacent the seal, via the duct 16, so that the integrity of the seal can be tested.

Figure 12 is a schematic cross-section in a plane perpendicular to the plane of the gasket and brace, through the axis of the duct 16. Figure 12 illustrates an example fluidic connection between the duct 16 and the port 14 and an example sealing arrangement between the gasket 12 and the two mating surfaces to be sealed.

The present invention has been described above purely by way of example. Modifications in detail may be made to the present invention within the scope of the claims as appended hereto. Furthermore, features from one example may be combined with an alternative example unless such a combination is explicitly precluded.

## Claims

1. A gasket assembly (10, 11) comprising:
a gasket (12) for providing a seal between two mating surfaces, the gasket comprising a port (14) for testing a seal provided by the gasket;
a duct (16) in fluid communication with the port;
a protective collar (18) surrounding the duct; and
a brace (20) engaging the protective collar such that load is transmitted between the protective collar and the brace;
**characterized by** that,
the brace (20) partially surrounds the gasket (12) in the plane of the gasket (12); and
the brace (20) is isolated from the duct (16).

2. The gasket assembly of claim 1, wherein the brace engages the gasket to transfer load from the protective collar to the gasket.

3. The gasket assembly of any of the preceding claims, wherein the brace comprises a plate thinner than the gasket.

4. The gasket assembly of any of the preceding claims, wherein the brace comprises two support members (52a, 52b) arranged parallel to, and flanking, the duct, wherein the support members engage the protective collar.

5. The gasket assembly of any of the preceding claims, wherein the brace comprises an alignment profile configured to align the gasket assembly during use.

6. The gasket assembly of any of the preceding claims, wherein the brace comprises an attachment device (30a, 30b) and the protective collar comprises a corresponding attachment device (28a, 28b) for mechanically securing the protective collar to the brace.

7. The gasket assembly of any of the preceding claims, wherein the internal bore of the protective collar provides a clearance fit with the duct.

8. The gasket assembly of any of the preceding claims, wherein the protective collar comprises a slot for receiving a portion of the brace.

9. The gasket assembly of any of the preceding claims, wherein the protective collar comprises a mechanical connector.

10. The gasket assembly of any of the preceding claims, wherein the duct comprises a first end connected to the gasket and a second end distal from the gasket, wherein the protective collar is located intermediate the first and second ends of the duct, optionally further comprising a cap (34) connected to the mechanical connector to protect an end of the duct.

11. The gasket assembly of any of the preceding claims, further comprising a fitting (22) connected to an end of the duct, wherein the fitting is configured to facilitate connection of an external device to the duct, wherein optionally the fitting is a compression fitting configured to only transfer axial loads to the duct when being connected or disconnected from the duct or an external device.

12. A gasket system comprising:
a gasket assembly according to any of claims 1 to 11 for providing a seal between two mating surfaces; and
a pressure testing device configured to be connected in fluid communication with the duct to test a seal provided by the gasket.

13. A method of providing a seal between two mating surfaces, the method comprising installing a gasket assembly according to any of claims 1 to 11 between the two mating surfaces.

14. A computer program comprising computer executable instructions that, when executed by a processor, cause the processor to control an additive manufacturing apparatus to manufacture the gasket assembly of any of claims 1 to 11.

## Patentansprüche

1. Dichtungsanordnung (10, 11) umfassend:
eine Dichtung (12) zum Bereitstellen einer Abdichtung zwischen zwei zusammenpassenden Oberflächen, wobei die Dichtung eine Öffnung (14) zum Testen einer durch die Dichtung bereitgestellten Abdichtung umfasst;
einen Kanal (16) in strömungstechnischer Kommunikation mit der Öffnung;
einen Schutzkragen (18), der den Kanal umschließt; und
eine Strebe (20), die so mit dem Schutzkragen in Eingriff steht, dass Last zwischen dem Schutzkragen und der Strebe übertragen wird;
**dadurch gekennzeichnet, dass**
die Strebe (20) die Dichtung (12) teilweise in der Ebene der Dichtung (12) umschließt; und die Strebe (20) vom Kanal (16) isoliert ist.

2. Dichtungsanordnung nach Anspruch 1, wobei die Strebe so mit der Dichtung in Eingriff steht, dass Last vom Schutzkragen auf die Dichtung übertragen wird.

3. Dichtungsanordnung nach einem der vorstehenden Ansprüche, wobei die Strebe eine Platte umfasst, die dünner als die Dichtung ist.

4. Dichtungsanordnung nach einem der vorstehenden Ansprüche, wobei die Strebe zwei Stützelemente (52a, 52b) umfasst, die parallel zum Kanal angeordnet sind und diesen flankieren, wobei die Stützelemente in den Schutzkragen eingreifen.

5. Dichtungsanordnung nach einem der vorstehenden Ansprüche, wobei die Strebe ein Ausrichtungsprofil umfasst, das so konfiguriert ist, dass es die Dichtungsanordnung während des Gebrauchs ausrichtet.

6. Dichtungsanordnung nach einem der vorstehenden Ansprüche, wobei die Strebe eine Befestigungsvorrichtung (30a, 30b) umfasst und der Schutzkragen eine entsprechende Befestigungsvorrichtung (28a, 28b) zur mechanischen Befestigung des Schutzkragens an der Strebe umfasst.

7. Dichtungsanordnung nach einem der vorstehenden Ansprüche, wobei die Innenbohrung des Schutzkragens eine Spielpassung mit dem Kanal bereitstellt.

8. Dichtungsanordnung nach einem der vorstehenden Ansprüche, wobei der Schutzkragen einen Schlitz zum Aufnehmen eines Teils der Strebe umfasst.

9. Dichtungsanordnung nach einem der vorstehenden Ansprüche, wobei der Schutzkragen einen mechanischen Verbinder umfasst.

10. Dichtungsanordnung nach einem der vorstehenden Ansprüche, wobei der Kanal ein erstes Ende, das mit der Dichtung verbunden ist, und ein zweites Ende, das von der Dichtung entfernt liegt, umfasst, wobei sich der Schutzkragen zwischen dem ersten und zweiten Ende des Kanals befindet, gegebenenfalls ferner umfassend eine Kappe (34), die mit dem mechanischen Verbinder verbunden ist, um ein Ende des Kanals zu schützen.

11. Dichtungsanordnung nach einem der vorstehenden Ansprüche, ferner umfassend ein mit einem Ende des Kanals verbundenes Formstück (22), wobei das Formstück so konfiguriert ist, dass es eine Verbindung einer externen Vorrichtung mit dem Kanal erleichtert, wobei es sich bei dem Formstück gegebenenfalls um ein Kompressionsformstück handelt, das so konfiguriert ist, dass es nur axiale Lasten auf den Kanal überträgt, wenn es mit dem Kanal oder einer externen Vorrichtung verbunden oder von dieser getrennt wird.

12. Dichtungssystem, umfassend:
eine Dichtungsanordnung nach einem der Ansprüche 1 bis 11 zum Bereitstellen einer Abdichtung zwischen zwei zusammenpassenden Oberflächen; und
eine Drucktestvorrichtung, die so konfiguriert ist, dass sie in strömungstechnischer Kommunikation mit dem Kanal steht, um die durch die Dichtung bereitgestellte Abdichtung zu testen.

13. Verfahren zum Bereitstellen einer Abdichtung zwischen zwei zusammenpassenden Oberflächen, wobei das Verfahren Einsetzen einer Dichtungsanordnung nach einem der Ansprüche 1 bis 11 zwischen den zwei zusammenpassenden Oberflächen umfasst.

14. Computerprogramm, umfassend computerausführbare Anweisungen, die, wenn sie von einem Prozessor ausgeführt werden, den Prozessor veranlassen, eine additive Herstellungseinrichtung zu steuern, um die Dichtungsanordnung nach einem der Ansprüche 1 bis 11 herzustellen.

## Revendications

1. Ensemble de joint (10, 11), comprenant :
un joint (12) pour fournir un joint d'étanchéité entre deux surfaces de contact, le joint comprenant un orifice (14) pour tester un joint d'étanchéité fourni par le joint ;
un conduit (16) en communication fluidique avec l'orifice ;
un collier protecteur (18) entourant le conduit ; et
une entretoise (20) s'engageant dans le collier protecteur de sorte que la charge est transmise entre le collier protecteur et l'entretoise ;
**caractérisé en ce que**
l'entretoise (20) entoure partiellement le joint (12) dans le plan du joint (12) ; et l'entretoise (20) est isolée du conduit (16).

2. Ensemble de joint selon la revendication 1, dans lequel l'entretoise s'engage dans le joint pour transférer une charge du collier protecteur au joint.

3. Ensemble de joint selon l'une quelconque des revendications précédentes, dans lequel l'entretoise comprend une plaque plus mince que le joint.

4. Ensemble de joint selon l'une quelconque des revendications précédentes, dans lequel l'entretoise comprend deux organes de support (52a, 52b) agencés parallèlement à et flanquant le conduit, dans lequel les organes de support s'engagent dans le collier protecteur.

5. Ensemble de joint selon l'une quelconque des revendications précédentes, dans lequel l'entretoise comprend un profil d'alignement configuré pour aligner l'ensemble de joint pendant l'utilisation.

6. Ensemble de joint selon l'une quelconque des revendications précédentes, dans lequel l'entretoise comprend un dispositif d'attache (30a, 30b) et le collier protecteur comprend un dispositif d'attache correspondant (28a, 28b) pour fixer mécaniquement le collier protecteur à l'entretoise.

7. Ensemble de joint selon l'une quelconque des revendications précédentes, dans lequel l'alésage interne du collier protecteur fournit un ajustement de jeu avec le conduit.

8. Ensemble de joint selon l'une quelconque des revendications précédentes, dans lequel le collier protecteur comprend une fente pour recevoir une portion de l'entretoise.

9. Ensemble de joint selon l'une quelconque des revendications précédentes, dans lequel le collier protecteur comprend un connecteur mécanique.

10. Ensemble de joint selon l'une quelconque des revendications précédentes, dans lequel le conduit comprend une première extrémité connectée au joint et une seconde extrémité distale par rapport au joint, dans lequel le collier protecteur est situé entre les première et seconde extrémités du conduit, facultativement comprenant en outre un capuchon (34) connecté au connecteur mécanique pour protéger une extrémité du conduit.

11. Ensemble de joint selon l'une quelconque des revendications précédentes, comprenant en outre un raccord (22) connecté à une extrémité du conduit, dans lequel le raccord est configuré pour faciliter la connexion d'un dispositif externe au conduit, dans lequel le raccord est facultativement un raccord à compression configuré pour transférer uniquement des charges axiales au conduit lorsqu'il est connecté ou déconnecté du conduit ou d'un dispositif externe.

12. Système de joint comprenant :
un ensemble de joint selon l'une quelconque des revendications 1 à 11 pour fournir un joint d'étanchéité entre deux surfaces en contact ; et
un dispositif de test de pression configuré pour être connecté en communication fluidique avec le conduit pour tester un joint d'étanchéité fourni par le joint.

13. Procédé de fourniture d'un joint d'étanchéité entre deux surfaces de contact, le procédé comprenant l'installation d'un ensemble de joint selon l'une quelconque des revendications 1 à 11 entre les deux surfaces de contact.

14. Programme informatique comprenant des instructions exécutables par ordinateur qui, lorsqu'elles sont exécutées par un processeur, amènent le processeur à commander un appareil de fabrication additive pour fabriquer l'ensemble de joint selon l'une quelconque des revendications 1 à 11.
